# EUROPÄISCHE PATENTSCHRIFT

(11) **EP 3 385 609 B1**
(45) Veröffentlichungstag und Bekanntmachung des Hinweises auf die Patenterteilung: **29.09.2021**
(21) Anmeldenummer: 18151331.8
(22) Anmeldetag: 12.01.2018
(51) Int. Cl.: F21S 41/40, F21S 41/147, F21S 41/25, F21S 41/255, G02B 19/00

(54) **LICHTMODUL FÜR EINEN KRAFTFAHRZEUGSCHEINWERFER**
LIGHT MODULE FOR A MOTOR VEHICLE HEADLAMP
MODULE D'ÉCLAIRAGE POUR PHARE DE VÉHICULE AUTOMOBILE

(30) Priorität: 07.04.2017 AT 502892017
(43) Veröffentlichungstag der Anmeldung: 10.10.2018
(73) Patentinhaber: ZKW Group GmbH, 3250 Wieselburg (AT)
(72) Erfinder: Reisinger, Bettina, 3300 Amstetten (AT); Moser, Andreas, 4320 Perg (AT); Petru, Balan, 6020 Innsbruck (AT); Bauer, Friedrich, 3252 Bergland (AT)
(74) Vertreter: Patentanwaltskanzlei Matschnig & Forsthuber OG

(56) Entgegenhaltungen:
- DE-A1- 3 226 580
- DE-A1- 4 329 332
- DE-A1-102008 003 929
- JP-A- 2012 099 419
- JP-A- 2014 063 604
- US-A1- 2007 086 202
- US-A1- 2011 205 748

## Beschreibung

Die Erfindung betrifft ein Lichtmodul für einen Kraftfahrzeugscheinwerfer, wie aus den Dokumenten DE 43 29 332, US 2011/205748, DE 10 2008 003 929, US 2007/0086202 und JP 2012-99419 bekannt.

Darüber hinaus betrifft die Erfindung einen Kraftfahrzeugscheinwerfer mit zumindest einem solchen Lichtmodul.

Weiters betrifft die Erfindung ein Kraftfahrzeug mit zumindest einem solchen Kraftfahrzeugscheinwerfer.

Im modernen KFZ-Bau werden besonders in Kraftfahrzeugscheinwerfern Bauteile aus leichten und in der Herstellung günstigen Kunststoffen eingesetzt. Beispielsweise kommen bei Blenden folgende Materialen in Frage: Polycarbonat (Makrolon) mit einer (thermischen) Beschädigungsschwelle von 10000 W/m², glasfaserverstärktes Polyethylenterephthalat PET-GF30 mit einer Beschädigungsschwelle von 60000 W/m² oder das glasfaserverstärkte Polyethylenterephthalat PET-GF35 mit einer Beschädigungsschwelle von 180000 W/m².

Beim Überschreiten der Beschädigungsschwelle eines Kunststoffmaterials fängt das Kunststoffmaterial an, zu schmelzen und sich zu verformen. Bei vielen aus dem Stand der Technik bekannten Lichtmodulen, insbesondere bei Projektions-Lichtmodulen, können durch eine fokussierende Wirkung der Linse, die zur Projektion des im Objektraum erzeugten Leuchtbilds in den Bildraum, also vor das Lichtmodul eingerichtet ist, bei starker Sonneneinstrahlung sowohl außerhalb des Lichtmoduls als auch innerhalb des Lichtmoduls optisch relevante Bauteile des Lichtmoduls oder des Kraftfahrzeugscheinwerfers beschädigt werden. Darüber hinaus können auch oberflächige Beschädigungen auftreten, die kundenseitig verlangte ästhetische Anforderungen an die Oberflächenbeschaffenheit bzw. -güte unterlaufen. Diese unerwünschten Effekte sind im Stand der Technik als "Brennglaseffekt" bekannt. In einer Brennebene der Linse ist das Risiko einer Beschädigung am höchsten, da es dort zu der höchsten Konzentration des einfallenden Sonnenlichts kommt. Daher müssen Materialien, die an solchen gefährdeten Stellen zum Einsatz kommen, sehr beständig, insbesondere wärmebeständig, sein, um Beschädigungen zu vermeiden. Genau dieser Brennglaseffekt wird aber bei den Lichtmodulen nach dem Stand der Technik nicht selten beobachtet, bei denen durch das Schmelzen und/oder das Verformen des Kunststoffes beispielsweise die Blenden ihre optischen Eigenschaften verlieren. Dadurch können die abgestrahlten Lichtverteilungen verzerrt werden. Infolgedessen kann es vorkommen, dass die Lichtverteilungen die gesetzlichen Vorgaben nicht mehr erfüllen. Wird beispielsweise eine solche Kunststoff-Blende in einem Lichtmodul zur Erzeugung einer Hell-Dunkel-Grenze bei einer Abblendlichtverteilung verwendet, wird diese Blende in der objektseitigen Brennebene - in der Objektbrennebene - der Linse positioniert. Bei einem Sonnenstand von beispielsweise 0° bis 10°, und insbesondere nahe 0°, hinsichtlich einer optischen Achse des Lichtmoduls kann es dabei zu sehr hohen Leistungsspitzen (hohen Werten der Beleuchtungsstärke) genau im Bereich eines zum Ausbilden des Asymmetrieanstiegs der Hell-Dunkel-Grenze vorgesehenen Bereichs einer optisch wirksamen Kante der Blende beziehungsweise der Strahlenblende kommen. Wird durch den Brennglaseffekt die Form der optisch wirksamen Kante, insbesondere ihren zum Ausbilden des Asymmetrieanstiegs der Hell-Dunkel-Grenze der Abblendlichtverteilung vorgesehenen Bereichs, der Kunststoff-Blende geändert, muss das Lichtmodul möglicherweise ausgetauscht werden, wenn die Abblendlichtverteilung, beispielsweise der Asymmetrieanstieg der Hell-Dunkel-Grenze, die gesetzlichen Vorgaben nicht mehr erfüllt.

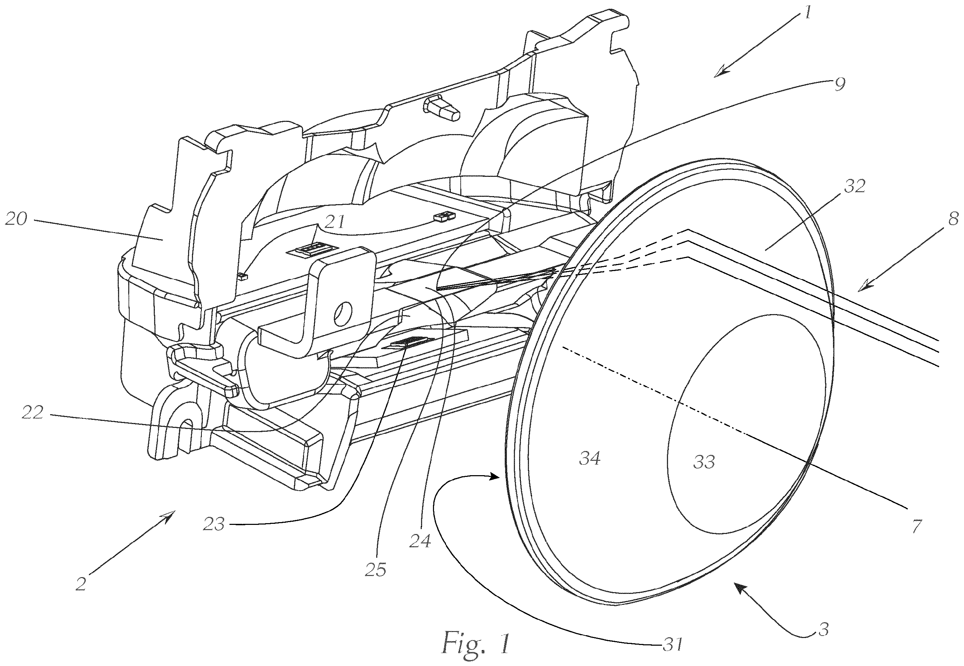

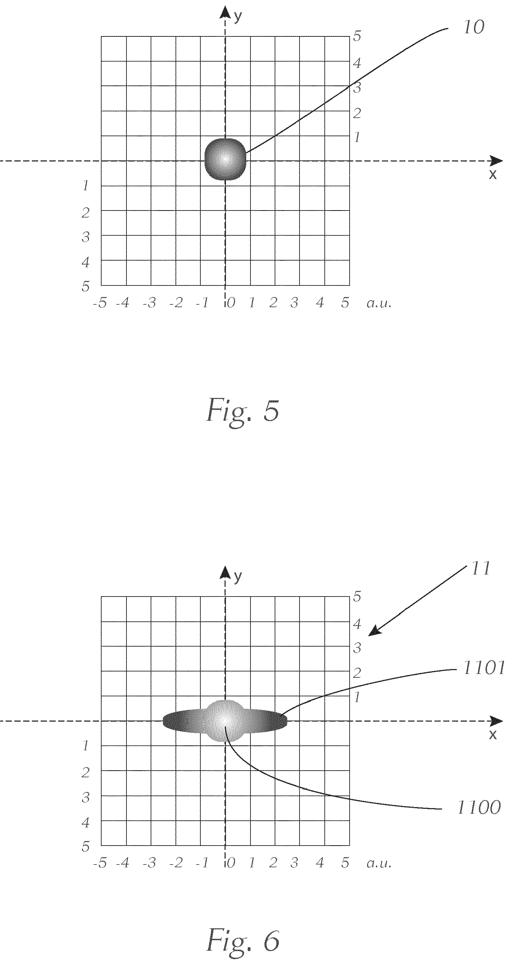

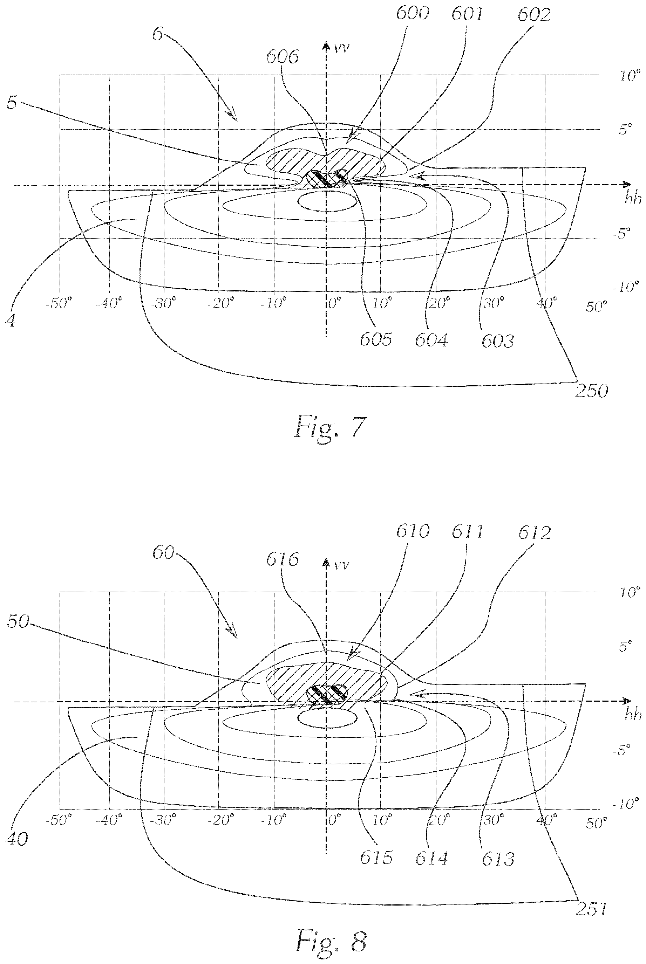

Ein möglicher Ansatz zur Lösung des oben genannten Problems ist, Blenden (Strahlenblenden) aus einem hitzebeständigen Material wie Metall oder Keramik zu verwenden. Eine andere Möglichkeit ist, auf eine Strahlenblende ganz zu verzichten, was nicht selten in Vorfeldmodulen gemacht wird. Mit solchen Lichtmodulen ist es allerdings schwierig, den Asymmetrieanstieg der Hell-Dunkel-Grenze zu erzeugen, da diese Lichtmodule beispielsweise eine reine Freiformlinse mit entlang der Vertikalen (y in den Figuren 5 und 6, oder vv in den Figuren 7 und 8) und entlang der Fahrtrichtung (z in der Figur 1) unterschiedlichen Brennweiten zur Ausbildung einer relativen unscharfen Hell-Dunkel-Grenze verwendet wird. Von Nachteil dabei ist, dass die Hell-Dunkel-Grenze ohne physische Blendenkante verwaschen beziehungsweise unscharf ist und ein Beleuchtungsstärke-Maximum der Lichtverteilung kann nur im Vorfeld nahe beim Fahrzeug ausgebildet werden, sodass die gesetzlichen Vorschriften für eine Abblendlichtverteilung nicht erfüllt werden können.

Eine weitere Möglichkeit dem Problem zumindest teilweise zu begegnen, ist die Linsenoberfläche beispielsweise durch Aufrauen und/oder Einbringen spezieller Lichtbrechungselemente zu verändern, dadurch einfallende Sonnenstrahlen zu zerstreuen und auf diese Weise gegen den Brennglaseffekt zu wirken. Durch derartige Lichtbrechungs- bzw. Lichtstreuelemente verliert die Linse allerdings den Eindruck eines volltransparenten Körpers, was neben einem ästhetischen Aspekt, welcher als technische Vorgabe gilt, auch eine negative Auswirkung auf Streueigenschaften der Linse und infolgedessen auf die erzeugte Lichtverteilung hat. Darüber hinaus sind Werkzeugformen, die zum Herstellen von Linsen mit den oben genannten Lichtstreuungselementen geeignet sind, schwierig in der Herstellung und nutzen sich beim Abgußvorgang ab, sodass das Werkzeug in regelmäßigen Abständen nachgearbeitet werden muss und die Qualität der Linsen nicht konstant ist. Dies gilt sowohl den Herstellungsvorgang von Kunststofflinsen als auch für (sogar in einem größeren Ausmaß) Blank-Pressverfahren von Linsen aus klassischen Glasmaterialen.

Die Aufgabe der vorliegenden Erfindung ist daher, ein Lichtmodul für einen Kraftfahrzeugscheinwerfer zu schaffen, bei welchem der Brennglaseffekt auf einfache und kostengünstige Weise reduziert werden kann.

Diese Aufgabe wird erfindungsgemäß mit den Merkmalen von Anspruch 1 gelöst. Erfindungsgemäß ist, beispielsweise bei einer Fernlichtverteilung, der zweite Bereich derart ausgebildet ist, dass die Brennfläche relativ zu der Objektbrennebene derart orientiert ist, so dass ein zentraler Bereich einer von dem Lichtmodul erzeugten Lichtverteilung nur in horizontaler Richtung vergrößert wird, wobei die vertikale Abbildung (vertikaler Abbildungsmaßstab) unbeeinflusst bleibt. Dadurch wird beispielsweise die Struktur der Hell-Dunkel-Grenze nicht geändert - die Form, Verlauf und Neigung des Asymmetrieanstiegs bleibt dabei gleich. Ein weiterer Vorteil ist, dass bei einem erfindungsgemäßen Lichtmodul, welches eine Lichtverteilung mit einem hohen Maximum erzeugt (hohe Werte der Beleuchtungsstärke in einem mittleren/ zentralen Bereich der Lichtverteilung sind gesetzlich vorgeschrieben und können der entsprechenden nationalen beziehungsweise regionalen Regelungen in EU, China, Japan, Südkorea, USA, Kanada, Mexiko usw. entnommen werden), welches Maximum schnell seitlich abfällt ("Spottigkeit"), dieses Maximum etwas seitlich verwischt und damit eine homogenere Lichtverteilung erzielt wird.

Vorteilhaft ist es, wenn die Brennfläche die Objektbrennebene beispielsweise entlang einer Linie schneidet. Vorzugsweise überlappt aber die Brennfläche die Objektbrennebene nicht. Daraus folgt, dass in der Bildbrennebene des ersten Teils der Linse liegende Objekte mittels des zweiten Teils der Linse unscharf in die Objektbrennebene abgebildet werden. Dies rührt beispielsweise daher, dass der erste und der zweite Teil der Linse verschiedene Abbildungsmaßstäbe aufweisen. Dabei liegen die in der Bildbrennebene der Linse angeordneten Objekte vorzugsweise nah an der optischen Achse. Dabei heißt "nah", dass wenn man ein solches Objekt, beispielsweise die Sonne, und den Objektbrennpunkt des ersten Bereichs mit einer Linie verbindet, schließt diese Linie mit der optischen Achse einen Winkel von ca. 0° bis 10°. Daher kann die in der Objektbrennebene durch Sonnenlicht erzeugte Beleuchtungsstärke reduziert werden und dadurch entstehender Schaden an dem in der Objektbrennebene angeordneten abzubildenden Objekt begrenzt werden. Je größer der Abstand zwischen der Objektbrennebene und der Brennfläche ist, desto kleiner ist der Brennglaseffekt.

Hinsichtlich der Herstellung des Lichtmoduls ist erfindungsgemäß das abzubildende Objekt zumindest teilweise, vorzugsweise ganz, aus einem Material, beispielsweise einem Kunststoff, mit einer vorgegebenen, beispielsweise thermischen, Beschädigungsschwelle ausgebildet ist, wobei die Beschädigungsschwelle beispielsweise einen Wert von etwa 180000 W/m², vorzugsweise einen Wert von etwa 60000 W/m², insbesondere einen Wert von etwa 10000 W/m², nicht überschreitet.

Bei einer weiteren vorteilhaften Ausführungsform des Lichtmoduls kann vorgesehen sein, dass das abzubildende Objekt in einem für das abzubildende Objekt vorgesehenen Halter gehalten ist/wird, wobei der Halter zumindest teilweise in der Objektbrennebene des ersten Teils der Linse angeordnet und aus einem Material (z.B. Kunststoff) mit einer vorgegebenen, beispielsweise thermischen, Beschädigungsschwelle ausgebildet ist, wobei die Beschädigungsschwelle beispielsweise einen Wert von etwa 180000 W/m², vorzugsweise einen Wert von etwa 60000 W/m², insbesondere einen Wert von etwa 10000 W/m², nicht überschreitet.

Darüber hinaus ist es besonders bei Abblendlichtmodulen von Vorteil, wenn das abzubildende Objekt als eine aus einem Kunststoff ausgebildete Blende mit einer optisch wirksamen Kante ausgebildet ist, wobei die, beispielsweise thermische, Beschädigungsschwelle des Kunststoffes beispielsweise einen Wert von etwa 180000 W/m², vorzugsweise einen Wert von etwa 60000 W/m², insbesondere einen Wert von etwa 10000 W/m², nicht überschreitet, wobei die Kante vorzugsweise dazu eingerichtet ist, eine Hell-Dunkel-Grenze mit einem Asymmetrieanstieg auszubilden.

Dadurch kann beispielsweise das Überschreiten einer vorgegebenen Beschädigungsschwelle in jedem Bereich des abzubildenden Objekts bei einem direkten Einstrahlen des Sonnenlichtes auf das Lichtmodul vermieden werden.

Es kann zweckdienlich sein, wenn die Linse plankonvex oder bikonvex ausgebildet ist. Dadurch dass der erste Bereich einem asphärischen Verlauf folgt, heißt das, dass der zweite Bereich die Konvexität der Linse nicht beeinträchtigt. Dabei ist es zweckmäßig, wenn die zweite (bildseitige) lichtbrechende Fläche der plan- oder bikonvexen Linse konvex (bildseitig gewölbt) ausgebildet ist. Bei einer bikonvexen Linse kann die erste lichtbrechende (objektseitige) Fläche beispielsweise sphärisch gewählt werden. Bei einer bikonvexen Linse ist es möglich, die erfindungsgemäße astigmatische Wirkung, welche bei nicht übereinstimmenden Brennfläche und Objektbrennebene auftreten kann, auf beide Grenzflächen, also auf die erste und auf die zweite lichtbrechende Fläche, aufzuteilen. Dieses Prinzip kann auch auf mehrstufige Abbildungssysteme erweitert werden.

Hinsichtlich der Herstellung der Linse, kann es vorteilhaft sein, wenn der zweite Bereich rotationssymmetrisch bezüglich der optischen Achse ausgebildet ist. Dabei kann die Linse mit einem einfacheren Werkzeug hergestellt sein.

Hinsichtlich der Abbildungseigenschaften der Linse, kann es vorteilhaft sein, wenn der zweite Bereich spiegelsymmetrisch bezüglich einer Horizontal- und/oder einer Vertikalebene, durch die die optische Achse verläuft, ausgebildet ist. Dabei kann die Freiform/der Verlauf des zweiten Bereichs dergestalt sein, dass beispielsweise die vertikalen sich von den horizontalen Hauptebenen des zweiten Bereichs unterscheiden (Verlust der Rotationssymmetrie). Dadurch kann einerseits die Bildvergrößerung in horizontaler Richtung erzielt und andererseits die Bildgröße in vertikaler Richtung gleich gehalten werden (siehe Figur 6). Die Absenkung bzw. die Lage der Hell-Dunkel-Grenze wird durch eine derartige Ausbildung der Freiform nicht verändert.

Darüber hinaus ist es denkbar, dass der zweite den zweiten Bereich der zweiten lichtbrechenden Fläche umfassende Teil der Linse eine optische Struktur, beispielsweise ein Prisma aufweist, welche optische Struktur dazu eingerichtet ist, eine Signlight-Lichtverteilung zu erzeugen. Vorzugsweise ist die optische Struktur an einer unteren, unterhalb der optischen Achse liegenden Hälfte des zweiten Bereichs angeordnet. In diesem Fall ist der zweite Bereich bezüglich der Horizontalebene nicht symmetrisch.

Es sei an dieser Stelle angemerkt, dass im Allgemeinen ein Freiform/ein Verlauf einer lichtbrechenden Fläche (beispielsweise der erste oder der zweite Bereich) anhand vom Verlauf der Krümmungslinien dieser lichtbrechenden Fläche ausgedrückt werden kann. Dabei lässt sich Verlauf von Krümmungslinien einer lichtbrechenden Fläche im Allgemeinen durch eine zu erzeugende Lichtverteilung bestimmen. Methoden mit den zuerst eine Lichtverteilung parametrisch vorgegeben wird und daraus eine Form einer lichtbrechenden Fläche errechnet wird, sind im Stand der Technik bekannt.

Darüber hinaus kann die Freiform des zweiten Bereichs der Linse bezüglich einer Vertikalebene, durch die die optische Achse verläuft asymmetrisch ausgebildet sein. Dadurch kann beispielsweise der Leuchtfleck in Figur 5 oder 6 derart verändert werden, dass er keine Symmetrien mehr aufweist.

Darüber hinaus kann es vorteilhaft sein, wenn durch einen Objektbrennpunkt, d.h. den Schnittpunkt zwischen der Objektbrennebene und der optischen Achse, verlaufende, durch die erste lichtbrechende Fläche der Linse in die Linse eintretende und durch den zweiten Bereich der zweiten lichtbrechenden Fläche der Linse austretende Lichtstrahlen nicht kollimiert sind.

Bei einer bevorzugten Ausführungsform kann es vorgesehen sein, dass die größte Krümmung des zweiten Bereichs kleiner als die kleinste Krümmung des ersten Bereichs. Der zweite Bereich ist dabei flacher als der erste Bereich ausgebildet.

Dabei ist es denkbar, dass durch einen Objektbrennpunkt verlaufende, durch die erste lichtbrechende Fläche der Linse in die Linse eintretende und durch den zweiten Bereich der zweiten lichtbrechenden Fläche der Linse austretende Lichtstrahlen auseinanderlaufen.

Bei einer weiteren vorteilhaften Ausführungsform, kann es vorgesehen sein, dass die kleinste Krümmung des zweiten Bereichs größer als die größte Krümmung des ersten Bereichs. Der zweite Bereich ist in diesem Fall mehr gekrümmt als der erste Bereich.

Dabei ist es von Vorteil, wenn durch einen Objektbrennpunkt, d.h. den Schnittpunkt zwischen der Objektbrennebene und der optischen Achse, verlaufende, durch die erste lichtbrechende Fläche der Linse in die Linse eintretende und durch den zweiten Bereich der zweiten lichtbrechenden Fläche der Linse austretende Lichtstrahlen zusammenlaufen.

Darüber hinaus ist es zweckdienlich, wenn der zweite Bereich der zweiten lichtbrechenden Fläche der Linse derart ausgebildet, dass ein Kraftfahrzeugscheinwerfer mit einem erfindungsgemäßen Lichtmodul eine alle gesetzlichen Normen erfüllende Hell-Dunkel-Grenze erzeugen kann. Dabei wird die Form der Hell-Dunkel-Grenze, vor allem im zentralen Sichtbereich (etwa von -10° bis +10° horizontal und von etwa -5° bis +5° vertikal), nicht beeinträchtigt.

Die Begriffe "oben", "unten", "vorn" und "hinten" werden im Zusammenhang mit der vorliegenden Erfindung auf die Lage des Lichtmoduls bezogen, die dieses in einem in einem Kraftfahrzeug eingebauten Kraftfahrzeugscheinwerfer einnehmen würde.

Die Erfindung samt weiteren Vorteilen ist im Folgenden an Hand beispielhafter Ausführungsformen näher erläutert, die in der Zeichnung veranschaulicht sind. In dieser zeigt
Fig. 1 ein Lichtmodul nach dem Stand der Technik in perspektivischer Ansicht umfassend Lichtquellen, Reflektoren, eine Blende und eine asphärische Linse,
Fig. 2 ein Lichtmodul gemäß der Erfindung in Seitenansicht,
Fig. 3 eine Draufsicht eines Teils des Lichtmoduls der Figur 1,
Fig. 4 eine Draufsicht eines Teils des Lichtmoduls der Figur 2,
Fig. 5 eine ins Unendliche mittels einer herkömmlichen (nicht erfindungsgemäßen) asphärischen Linse abgebildete
"Punktlichtquelle",
Fig. 6 eine ins Unendliche mittels einer erfindungsgemäßen asphärischen Linse abgebildete "Punktlichtquelle",
Fig. 7 eine mit dem Lichtmodul der Figur 1 erzeugte Fernlichtverteilung,
Fig. 8 eine mit dem Lichtmodul der Figur 2 erzeugte erfindungsgemäße Fernlichtverteilung,
Fig. 9 einen Strahlenverlauf in einem vereinfachten optischen System bestehend aus einer herkömmlichen Linse und einer in einem Objektbrennpunkt dieser Linse angeordneten "Punktlichtquelle",
Fig. 10 einen Strahlenverlauf in einem vereinfachten optischen System bestehend aus einer erfindungsgemäßen Linse und einer in einem Objektbrennpunkt dieser Linse angeordneten "Punktlichtquelle",
Fig. 11 einen Strahlenverlauf in einem vereinfachten optischen System bestehend aus einer anderen erfindungsgemäßen Linse und einer in einem Objektbrennpunkt dieser Linse angeordneten "Punktlichtquelle".

Figur 1 zeigt ein Lichtmodul 1, konkret ein LED-Bi-Funktions-Projektionsmodul, das aus dem Stand der Technik bekannt ist. Das Lichtmodul umfasst eine Beleuchtungsvorrichtung 2 und eine asphärische Linse 3. Die Beleuchtungsvorrichtung 2 weist einen oberen Reflektor 20, dem eine erste Lichtquelle 21 in Form von einer oder mehreren LEDs zugeordnet ist (der obere Reflektor 20 und die erste Lichtquelle 21 sind in einer oberen Beleuchtungseinheit enthalten), sowie einen unteren Reflektor 22 mit einer zweiten Lichtquelle 23 auf (der untere Reflektor 22 und die zweite Lichtquelle 23 sind in einer unteren Beleuchtungseinheit enthalten), wobei die Lichtquelle 23 ebenfalls eine oder mehrere LEDs umfasst. Die beiden Lichtquellen 21, 23 sind vorzugsweise getrennt ansteuerbar.

Die Lichtquellen 21, 23 liegen dabei im Wesentlichen in einem ersten Brennpunkt des der entsprechenden Lichtquelle zugeordneten Reflektors 20, 22. Die Objektbrennebene (die Brennebene im Objektraum) der Linse 3 verläuft in etwa bzw. exakt durch zweite Brennpunkte der beiden Reflektoren 20, 22.

Weiters ist eine (in diesem Fall starre) waagrechte oder leicht nach rückwärts abgesenkte, beispielsweise zur optischen Achse 7 um etwa 0° bis 10° vertikal geneigte, Blende 24 vorgesehen, deren optisch wirksame Kante 25 zur Erzeugung einer Hell-Dunkel-Grenze der Linse 3 zugewandt ist. Diese Blende 24 bzw. die optisch wirksame Kante 25 entspricht einem abzubildenden Objekt. Mit der oberen Beleuchtungseinheit, die den oberen Reflektor 20 und die erste Lichtquelle 22 umfasst, kann somit Licht für eine Abblendlichtverteilung 4, die in Figur 7 als Teil einer Fernlichtverteilung 6 ausgebildet ist, erzeugt werden. Über die untere Beleuchtungseinheit kann Licht für einen Teil 5 einer Fernlichtverteilung erzeugt werden. Wenn die ganze - d.h. sowohl die untere, als auch die obere Beleuchtungseinheit - Beleuchtungsvorrichtung 2 eingeschaltet ist, kann das Licht für eine Gesamtlichtverteilung (gesamte Fernlichtverteilung) 6 erzeugt werden. Wie es sich dem Fachmann aus der obigen Beschreibung erschließt, wird für die Bildung der Lichtverteilungen (Abblendlichtverteilung 4, Teil 5 der Fernlichtverteilung und Fernlichtverteilung 6) vor dem Lichtmodul eine, beispielsweise aus dem Stand der Technik bekannte asphärische Linse 3 benötigt, die mittels des Lichts der einen oder der beiden oben beschriebenen Beleuchtungseinheiten und der in der Objektbrennebene der Linse 3 angeordneten Blende 24 erzeugtes Leuchtbild in das Bildraum projiziert bzw. in die Bildbrennebene (Brennebene im Bildraum) abbildet. Es soll an dieser Stelle angemerkt sein, dass die im letzten Satz dargelegten Überlegungen mutatis mutandis für alle Projektionslichtmodule gelten. Beispielsweise gilt dies für Projektionslichtmodule, bei welchen die Lichtverteilung durch eine Vorsatzoptikeinrichtung mittels Brechung und/oder Totalreflexion erzeugt wird, wobei die Vorsatzoptikeinrichtung beispielsweise transparente Vollkörper beispielsweise Linsen aus Kunststoff oder Glas, wie TIR-Linsen, aber keine Reflektoren im gewöhnlichen Sinne aufweist.

Die Linse 3 weist zwei lichtbrechende Flächen 31, 32 auf (Figur 1). Die erste lichtbrechende Fläche 31 ist plan ausgebildet und der Blende 24 zugewandt. Die zweite lichtbrechende Fläche 32 liegt der ersten lichtbrechenden Fläche 31 gegenüber und weist zumindest zwei nicht überlappende Bereiche 33 und 34 auf. Dabei weisen die beiden Bereiche 33, 34 bei dieser herkömmlichen asphärischen Linse 3 den gleichen asphärischen Verlauf bzw. die gleiche asphärische Form auf und sind rotationssymmetrisch bezüglich der optischen Achse 7 ausgebildet. Der erste Bereich 33 ist zentral an der zweiten lichtbrechenden Fläche 32 angeordnet. Die Bildbrennebene (nicht gezeigt) der asphärischen Linse 3 befindet sich im Unendlichen. Die Tatsache, dass die Bereiche 33 und 34 der zweiten lichtbrechenden Fläche 32 der asphärischen Linse 3 "den gleichen" asphärischen Verlauf aufweisen, bedeutet, dass die Linse 3 die in ihrer Objektbrennebene befindlichen Objekte ohne sphärische Abbildungsfehler in die Bildbrennebene abbildet. Umgekehrt gilt, dass die Linse 3 die in ihrer Bildbrennebene befindlichen Objekte ohne sphärische Abbildungsfehler in die Objektbrennebene abbildet.

Weiters zeigt die Figur 1 aus dem Unendlichen kommende Sonnenstrahlen 8 einer beispielsweise tiefstehenden Sonne, die auf die Linse 3 treffen und durch diese durchtreten, wobei sie jeweils an der zweiten lichtbrechenden Fläche 32 und an der ersten lichtbrechenden Fläche 31 gebrochen werden. Die Sonnenstrahlen 8 breiten sich im Wesentlichen parallel zu der optischen Achse 7 der Linse 3 aus, d.h. der Neigungswinkel der Sonnenstrahlen 8 zu der optischen Achse 7 beträgt in etwa 0° bis 30°, vorzugsweise 0° bis 10°. Aufgrund der asphärischen Form der Linse 3 und der Position ihrer Bildbrennebene im Unendlichen werden die Sonnenstrahlen 8 durch die Linse 3 gebündelt und auf die in der Objektbrennebene liegende Blende 24 gerichtet. Dadurch entsteht auf der Blende 24 ein Brennbereich 9, auf den die durch die asphärische Linse 3 gebündelten Sonnenstrahlen 8 eintreffen. Dabei kann die Bestrahlungsstärke im Brennbereich 9 Werte von etwa 250000 W/m², beispielsweise einen Wert von 252000 W/m² erreichen. Herkömmliche Blenden werden oft aus einem Kunststoffmaterial hergestellt. Dies trifft insbesondere auf Designblenden zu. Beispielsweise kann die Blende 24 aus einem der folgenden Materialen hergestellt sein: dem Polycarbonat (Makrolon) mit einer beispielsweise thermischen Beschädigungsschwelle von 10000 W/m², dem glasfaserverstärkten Polyethylenterephthalat PET-GF30 mit einer beispielsweise thermischen Beschädigungsschwelle von 60000 W/m² oder dem glasfaserverstärkten Polyethylenterephthalat PET-GF35 mit einer beispielsweise thermischen Beschädigungsschwelle von 180000 W/m². Beim Überschreiten der beispielsweise thermischen Beschädigungsschwelle eines Kunststoffmaterials fängt das Kunststoffmaterial an, zu schmelzen und sich zu verformen. Das Schmelzen und/oder das Verformen des Kunststoffes im Brennbereich und in der Nähe des Brennbereichs beeinträchtigt die optischen Eigenschaften des entsprechenden abzubildenden Objektes, beispielsweise einer Blende oder eines Linsen-, Lichtkonversionsmittel- oder Lichtquellenhalters. Dabei kann das abzubildende Objekt durch Verlust seiner Form oder seiner vorgesehenen Lage im Lichtmodul die abgestrahlte Lichtverteilung nachteilig beeinflussen, welche Lichtverteilung verzerrt wird oder gar die gesetzlichen Vorgaben nicht mehr erfüllt.

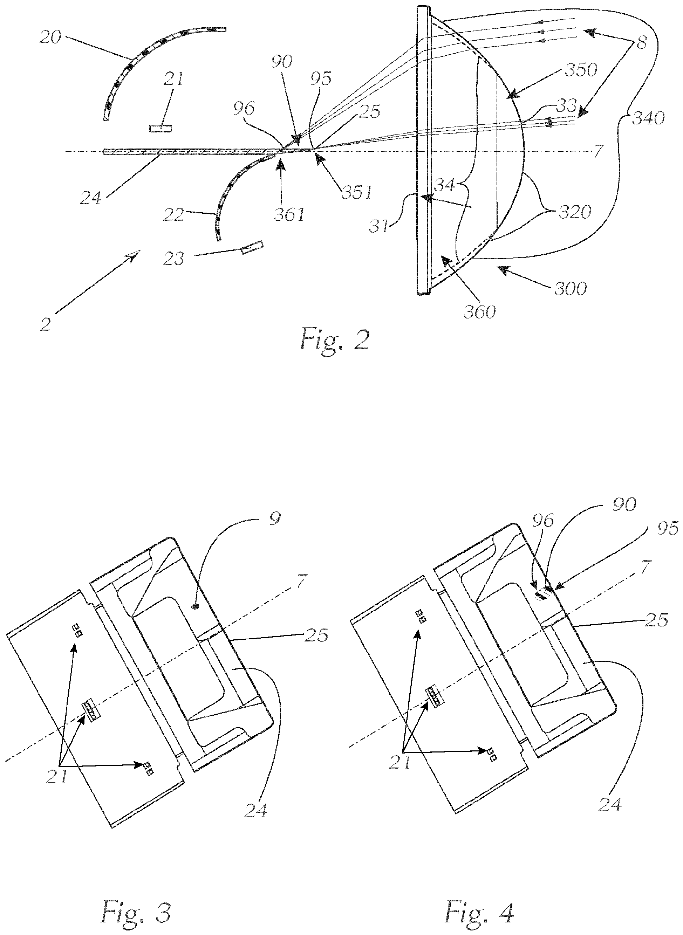

Figur 2 zeigt ein Lichtmodul 100, das einem Lichtmodul gemäß der vorliegenden Erfindung entspricht. Die Bauteile des erfindungsgemäßen Lichtmoduls 100, die den Bauteilen des Lichtmoduls der Figur 1, das einem Lichtmodul nach dem Stand der Technik entspricht, gleich sein können, werden mit den gleichen Bezugszeichen versehen. Beispielsweise kann das erfindungsgemäße Lichtmodul 100 eine Beleuchtungsvorrichtung nach dem Stand der Technik aufweisen. Dies kann beispielsweise die Beleuchtungsvorrichtung 2 des Lichtmoduls 1 der Figur 1 sein. Der Einfachheit der Darstellung halber wird im Weiteren angenommen, dass sich das dem erfindungsgemäßen Lichtmodul entsprechende Lichtmodul 100 von dem Lichtmodul 1 nach dem Stand der Technik, das in der Figur 1 gezeigt ist, durch eine Linse 300 unterscheidet.

Konkret zeigt die Figur 2 das Lichtmodul 100 in Seitenansicht bei dem eine spezielle Linse 300 vorgesehen ist. Die Spezifika der Linse 300 werden nachstehend näher erörtert. Die Linse 300 weist zwei lichtbrechende Flächen auf, wobei eine erste lichtbrechende Fläche 31 plan ausgebildet und dem abzubildenden Objekt zugewandt ist und die zweite lichtbrechende Fläche 320 der ersten lichtbrechenden Fläche 31 gegenüber liegt und zumindest zwei unterschiedlich ausgebildete, nicht überlappende Bereiche 33, 340 aufweist, wobei ein erster Bereich 33 eine asphärische Form aufweist, zentral an der zweiten lichtbrechenden Fläche 320 angeordnet ist und rotationssymmetrisch bezüglich der optischen Achse 7 ausgebildet ist. Ein erster Teil 350 der Linse 300, welcher Teil 350 den ersten Bereich 33 und die erste lichtbrechende Fläche 31 umfasst, hat eine Objektbrennebene 351, in der ein abzubildendes Objekt, beispielsweise Blende 24 mit einer optisch wirksamen Kante 25 der Beleuchtungsvorrichtung 2, liegt, und eine im Unendlichen liegende Bildbrennebene. Dabei verläuft die Objektbrennebene 351 vorzugsweise in etwa bzw. exakt durch zweite Brennpunkte der beiden Reflektoren 20, 22 der Beleuchtungsvorrichtung 2, wie dies im Zusammenhang mit Figur 1 beschrieben ist.

Darüber hinaus weist zumindest ein zweiter Bereich 340 der zweiten lichtbrechenden Fläche 320 einen freiförmigen, von der asphärischen Form des zweiten Bereichs 34 der herkömmlichen Linse 3 abweichenden Verlauf auf und ist derart ausgebildet, dass in der Bildbrennebene des ersten Teils 350 der Linse 300, vorzugsweise nah an der optischen Achse 7, liegende Objekte durch diesen zweiten Bereich 340 nicht in die Objektbrennebene abgebildet werden (Figur 2). Der zweite erfindungsgemäße Bereich 340 kann beispielsweise auch sphärischen oder ellipsoiden Verlauf aufweisen. Wie der zweite Bereich 34 nach dem Stand der Technik verlaufen würde, ist in Figur 2 mit einer gestrichelten Linie angedeutet. "Nahe an der optischen Achse" heißt in dem vorliegenden Fall, dass wenn man ein solches Objekt, beispielsweise die tiefstehende Sonne, und den Objektbrennpunkt des ersten Bereichs 33 mit einer Linie verbindet, schließt diese Linie mit der optischen Achse 7 einen spitzen Winkel von ca. 0° bis 35°, vorzugsweise von ca. 0° bis 10°. Zweckdienlich kann es sein, wenn der Bereich 340 bezüglich eine Horizontalebene, in der die optische Achse 7 liegt, asymmetrisch ausgebildet ist. Zum Beispiel kann der zweite Bereich 340 oberhalb der Horizontalebene eine andere Freiform aufweisen, als unterhalb der Horizontalebene.

Die Forderung, dass die in der Bildbrennebene liegenden Objekte durch den zweiten Bereich 340 in die Objektbrennebene unscharf abgebildet werden, heißt, dass ein zweiter Teil 360 der Linse 300, der die erste lichtbrechende Fläche 31 und den zweiten Bereich 340 umfasst, eine andere Brennebene bzw. Brennfläche 361 im Objektraum als die Objektbrennebene 351 des ersten Teils 350 der Linse 300 aufweist. Vorzugsweise überschneidet diese Brennebene bzw. Brennfläche 361 des zweiten Teils 360 die Objektbrennebene 351 des ersten Teils 350 der Linse 300 nicht. Besonders vorteilhaft ist, wenn die Brennebene bzw. Brennfläche 361 des zweiten Teils 360 von der Objektbrennebene 351 des ersten Teils 350 der Linse 300 beabstandet ist. Je größer ist der Abstand zwischen der Brennebene bzw. Brennfläche 361 des zweiten Teils 360 und der Objektbrennebene 351 des ersten Teils 350, umso schwächer werden die durch den zweiten Teil 360 der Linse 300 durchtretenden Lichtstrahlen, beispielsweise Sonnenstrahlen 8, in der Objektbrennebene des ersten Teils 351 der Linse 300 fokussiert. Darüber hinaus ist der zweite Bereich 340 derart ausgebildet ist, dass die Brennfläche 361 relativ zu der Objektbrennebene derart orientiert ist, dass das Verwischen/Vergrößern der Lichtverteilung beispielsweise nur horizontal erfolgt, wobei die vertikale Abbildung unbeeinflusst bleibt (siehe insbesondere Figuren 5 und 6). Dadurch wird beispielsweise die Struktur der Hell-Dunkel-Grenze nicht geändert.

Es werden also zwei, vorzugsweise nicht überlappende Brennbereiche 95, 96 gebildet, wobei die gesamte Beleuchtungsstärke auf diese zwei Brennbereiche 95, 96 verteilt wird. Ein erster Brennbereich 95 bzw. ein zweiter Brennbereich 96 liegt in der Objektbrennebene 351 des ersten Teils 350 bzw. in der Brennfläche 361 des zweiten Teils 360 der Linse 300 und entsteht durch die durch den ersten Teil 350 bzw. durch den zweiten Teil 360 der Linse 300 durchtretenden Sonnenstrahlen 8. Eine Vereinigung des ersten Brennbereichs 95 und des zweiten Brennbereichs 96 bildet einen modifizierten Brennbereich 90, der mit einer geringeren Bestrahlungsstärke als der Brennbereich 9, der bei einer Linse 3 nach dem Stand der Technik entsteht, bestrahlt wird, da ein Teil der auf die Linse 300 einfallenden Sonnenstrahlen 8 nicht in die Objektbrennebene 351, in der die Blende 24 und die optisch wirksame Kante 25 angeordnet sind, sondern in die Brennfläche 361 fokussiert wird. Der modifizierte Brennbereich 90 ist daher größer als der aus dem Stand der Technik bekannte Brennbereich 9.

Je nach Größe und Flächen-, insbesondere Krümmungseigenschaften des zweiten Bereichs 340 kann eine Reduzierung der Bestrahlungsstärke von bis zu 45%, beispielsweise 35% oder 40%, erreicht werden. Wie oben bereits erwähnt, kann die Bestrahlungsstärke in dem Brennbereich 9 in dem Lichtmodul 1 nach dem Stand der Technik Werte von etwa 250000 W/m², beispielsweise einen Wert von 252000 W/m² erreichen. Der zweite Bereich 340 der zweiten lichtbrechenden Fläche 320 der Linse 300 kann derart ausgebildet sein, dass die Bestrahlungsstärke im modifizierten Brennbereich 90 von etwa 164000 W/m² aufweist. Dadurch wird zum Beispiel das Risiko des Schmelzens und des Verformens der Blende 24 und/oder eines Teils des Reflektors 22 der unteren Beleuchtungseinheit reduziert, wenn diese aus einem leichtschmelzenden Kunststoffmaterial ausgebildet sind/ist. Ist zum Beispiel die Blende 24 aus einem glasfaserverstärkten Polyethylenterephthalat PET-GF35 mit einer Beschädigungsschwelle von 180000 W/m² hergestellt, so fängt diese Blende 24 bei dem Lichtmodul 1 nach dem Stand der Technik relativ schnell an, zu schmelzen und sich zu verformen, da die Bestrahlungsstärke bei einem Brennglaseffekt (etwa 250000 W/m², beispielsweise 252000 W/m²) die Beschädigungsschwelle dieser Blende bei weitem überschreitet. Im Gegenteil kann eine solche Blende in dem Lichtmodul 100 gemäß der vorliegenden Erfindung ohne Bedenken eingesetzt werden.

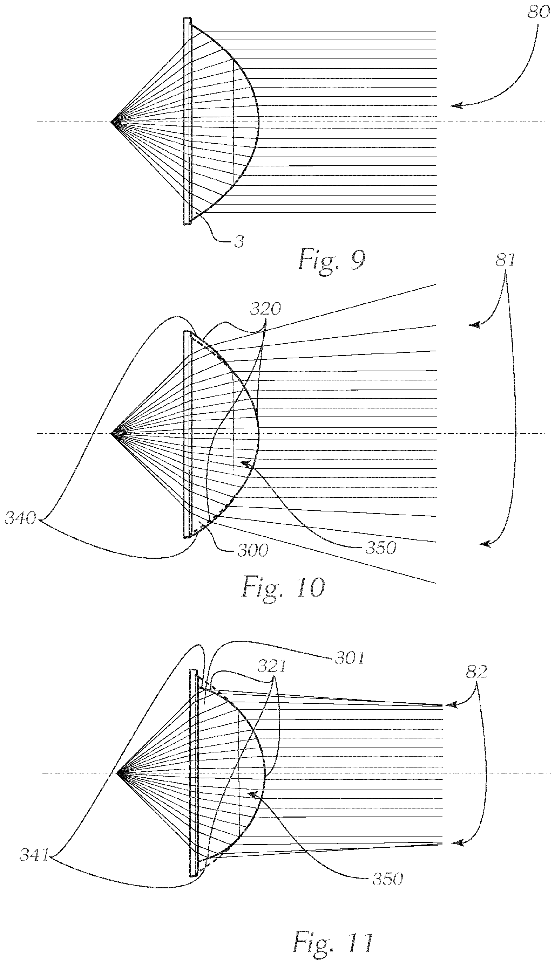

Der in der Figur 2 gezeigte zweite Bereich 340 der zweiten lichtbrechenden Fläche 320 der Linse 300 weist eine geringere Krümmung auf als die Krümmung des zweiten Bereichs 34 nach dem Stand der Technik. In diesem Fall treffen die durch die Linse 300 des erfindungsgemäßen Lichtmoduls 100 durchtretenden Sonnenstrahlen 8 auf die Blende 24 nach der optisch wirksamen Kante 25 ein. Es ist aber durchaus denkbar, dass der zweite Bereich 340 der Linse 300 des erfindungsgemäßen Lichtmoduls 100 eine größere Krümmung als der zweite Bereich 34 der Linse 3 des Lichtmoduls 1 aus dem Stand der Technik aufweist (siehe insbesondere Figur 11). In einem solchen Fall können die durch die Linse des erfindungsgemäßen Lichtmoduls durchtretenden Sonnenstrahlen an der Blende und an der optisch wirksamen Kante vorbei laufen / umgeleitet werden (nicht gezeigt).

Nun wird auf die Figuren 3 und 4 Bezug genommen, die die Unterschiede zwischen einem erfindungsgemäßen Lichtmodul 100 und einem Lichtmodul 1 nach dem Stand der Technik verdeutlichen. Diese Figuren zeigen eine Draufsicht eines Ausschnitts jeweils der Beleuchtungsvorrichtung 2 der Figur 1 mit dem Brennbereich 9 und der Beleuchtungsvorrichtung 2 der Figur 2 mit dem modifizierten Brennbereich 90, wobei der modifizierte Brennbereich im Gegensatz zu Figur 2 durch zwei sich überlappende Brennbereiche - den ersten Brennbereich 95 und den zweiten Brennbereich 96 - gebildet ist.

Dabei umfasst der Ausschnitt der Beleuchtungsvorrichtung 2 die obere Beleuchtungseinheit, die die mehrere LEDs aufweisende Lichtquelle und eine Platine aufweist, auf der die LEDs symmetrisch hinsichtlich der optischen Achse 7 angeordnet sind, und die Blende 24 mit der optisch wirksamen Kante 25. Einer Zusammenschau der Figuren 3 und 4 kann unmittelbar entnommen werden, dass der Brennbereich 9 in einem Lichtmodul 1 nach dem Stand der Technik deutlich kleinere Fläche annimmt als der modifizierte Brennbereich 90 in einem erfindungsgemäßen Lichtmodul 100. Dabei ist zu berücksichtigen, dass diese Brennbereiche von dem gleichen Lichtstrahlbündel der Sonnenstrahlen 8 herrühren. Das heißt, dass die gesamte auf den jeweiligen Brennbereich übertragene Leistung der eingehenden elektromagnetischen Energie in Form von Sonnenstrahlen in beiden Fällen gleich. Da aber der Brennbereich 9, welcher von einer herkömmlichen asphärischen Linse 3 (in der Figur 3 nicht gezeigt) erzeugt wird, kleiner als der modifizierte Brennbereich 90, welcher von einer erfindungsgemäßen Linse 300 (in der Figur 4 nicht gezeigt), ist, ist die Bestrahlungsstärke des Letzteren (des modifizierten Brennbereichs 90 in dem Lichtmodul 100 gemäß der Erfindung) kleiner als die Bestrahlungsstärke des Ersteren (des Brennbereichs 9 in dem Lichtmodul 1 nach dem Stand der Technik).

Weiters ist aus Zusammenschau der Figuren 5 und 6 eine weitere vorteilhafte Wirkung eines erfindungsgemäßen Lichtmoduls ersichtlich. Die Figur 5 zeigt ein Simulationsergebnis, bei welcher eine Abbildung einer "Punktlichtquelle" - ein erster Leuchtfleck 10 - mittels einer asphärischen Linse erzeugt wird, wobei die Punktlichtquelle in einem Brennpunkt der asphärischen Linse angeordnet ist. Als Sensor kann dabei ein "Winkelsensor" im Fernfeld dienen. Die Figur 6 zeigt eine Simulation, bei welcher eine Abbildung der "Punktlichtquelle" - ein zweiter Leuchtfleck 11 - mittels einer erfindungsgemäßen Linse erzeugt wird, wobei die Punktlichtquelle in einem Brennpunkt der erfindungsgemäßen Linse angeordnet ist. Die Simulationsergebnisse sind Darstellung der Punktlichtquelle im Fernfeld und veranschaulichen einen Öffnungswinkel der Strahlenbündel (in a.u. in Figuren 5 und 6). In Figur 5 ist ein Abstrahlkegel mit konstanten Öffnungswinkel in vertikaler und horizontaler Richtung erkennbar - Leuchtfleck 10 entspricht somit einem Kreis. Die Figur 6 lässt sofort erkennen, dass der zweite Leuchtfleck 11 aus zwei, sich überlappenden Leuchtflecksegmenten 1100, 1101 gebildet ist. Das erste Leuchtflecksegment 1100 weist eine der Form des ersten Leuchtflecks 10 der Figur 5 im Wesentlichen gleiche Form auf. Das zweite Leuchtflecksegment 1101 kann dabei ellipsenförmig ausgebildet und in eine Richtung x ausgedehnter als in die andere, der Richtung x orthogonal stehende Richtung y sein. Daraus folgt, dass beispielsweise das entsprechende Strahlenbündel in horizontaler Richtung x einen größeren Öffnungswinkel als in vertikaler Richtung y. Das Strahlbündel der Figur 6 weist somit unterschiedliche Divergenz in den orthogonalen Hauptschnitten auf. Dadurch kann beispielsweise dafür gesorgt werden, dass die Struktur der Hell-Dunkel-Grenze unbeeinflusst bleibt. Dabei verläuft die eine Richtung x horizontal (parallel zu hh-Linie), wenn die erfindungsgemäße Linse in einem in ein Kraftfahrzeugscheinwerfer eingebauten Lichtmodul angeordnet ist. Es sei hier daran erinnert, dass ein Abblendlichtmodul keinen verwischten Asymmetrieanstieg erzeugen sollte. Deshalb ist es zweckdienlich, wenn der zweite Bereich hinsichtlich des ersten Bereichs derart angeordnet ist, dass durch den ersten Bereich kaum Licht (0 - 10 % der Gesamtmenge) durchgeht, welches von der zumindest einen Lichtquelle des Lichtmoduls zur Bildung des Asymmetrieanstiegs einer Abblendlichtverteilung erzeugt wird, wenn das Lichtmodul als ein Abblendlichtmodul ausgebildet und in einen Kraftfahrzeugscheinwerfer eingebaut ist.

Dieser Effekt spiegelt sich in der mit dem entsprechenden Lichtmodul erzeugten Lichtverteilung wieder. Figur 7 zeigt beispielsweise eine mit dem Lichtmodul 1 nach dem Stand der Technik erzeugte und gemäß Standartpraxis in einem Lichttechniklabor ausgemessene Fernlichtverteilung 6, die aus der Teil-Fernlichtverteilung 5 (Teil der Fernlichtverteilung) und der Abblendlichtverteilung 4 mit einer Hell-Dunkel-Grenze 250 besteht. Die Fernlichtverteilung 6 weist einen mittleren Bereich 600, sowie diesen Bereich 600 umlaufende Isoluxlinien 601, 602 auf. Jede Isoluxlinie 601, 602 ist durch einen Wert der Beleuchtungsstärke gekennzeichnet. Wie dies auf der Figur 7 zu sehen ist, weist zumindest ein Teil der Isoluxlinien 601, 602 zumindest einen sich verjüngenden Abschnitt 603 und eine Vertiefung 606 auf. Dabei verjüngt sich der zumindest eine Abschnitt der entsprechenden Isoluxlinie 601, 602 im Wesentlichen parallel zu einer horizontalen Achse hh in Richtung des mittleren Bereichs 600 der Lichtverteilung 6. Die Vertiefung 606 ist in etwa dem mittleren Teil der (hinsichtlich der vv-Linie) oberen Hälfte der Isoluxlinie 601 angeordnet, die als zweite Isoluxlinie den mittleren Bereich 600 umläuft.

In der Lichttechnik wird die horizontale Achse hh oft als "Horizont" oder "Horizontale" genannt. Dieser horizontalen Achse hh orthogonal stehende, vertikale Achse vv wird oft als "Vertikale" genannt. Die vertikale Achse vv schneidet die horizontale Achse im HV-Punkt (der Begriff HV-Punkt ist ebenfalls in der Lichttechnik allgemein bekannt).

Im Zusammenhang mit der vorliegenden Erfindung beziehen sich die in Bezug auf Bauteile des erfindungsgemäßen Lichtmoduls verwendeten Begriffe "horizontal" und "vertikal", sowie "oben" und "unten" auf eine Lage des Lichtmoduls, in der dieses Lichtmodul von einem Fachmann in einen Kraftfahrzeugscheinwerfer zum Zwecke einer ordnungsgemäßen Verwendung des Kraftfahrzeugscheinwerfers in einem Kraftfahrzeug eingebaut würde.

Jeder zumindest eine sich verjüngende Abschnitt 603 weist zumindest einen Spitzenabschnitt 604, 605 auf. Beispielsweise, wie Figur 7 zeigt, ist ein erster Spitzenabschnitt 605 ein Teil der als zweite Isoluxlinie den mittleren Bereich 600 umlaufenden Isoluxlinie 601 und ein zweiter Spitzenabschnitt 604 ein Teil der als zweite Isoluxlinie den mittleren Bereich 600 umlaufenden Isoluxlinie 602. Die Existenz solcher Spitzenabschnitte 604, 605 und Vertiefungen 606 ist ein Hinweis auf eine inhomogene Lichtverteilung (im Fall der Figur 7 ist dies eine Fernlichtverteilung 6), die vom Fahrer wegen ihrer Kontraständerungen als unangenehm empfunden wird. Solche sich verjüngende Abschnitte der Isoluxlinien werden im Stand der Technik als "Einschnürung zwischen Abblendlicht und Fernlicht" bekannt. Dabei gilt, dass zu starke Einschnürung zu empfindlich für eine entgegenkommende lenkende Person sein kann.

Figur 8 zeigt zum Vergleich eine mit dem erfindungsgemäßen Lichtmodul 100 erzeugte und gemäß Standartpraxis in einem Lichttechniklabor ausgemessene Fernlichtverteilung 60, die aus der Teil-Fernlichtverteilung 50 (Teil der Fernlichtverteilung) und der Abblendlichtverteilung 40 mit einer Hell-Dunkel-Grenze 251 besteht. Die Fernlichtverteilung 60 weist ebenfalls einen mittleren beziehungsweise zentralen, vorzugsweise sich von etwa - 10° bis +10° horizontal und von -1° bis 3° vertikal erstreckenden Bereich 610, sowie diesen Bereich 610 umlaufende Isoluxlinien 611, 612 auf. Die mit Bezugszeichen 601 (Figur 7) und 611 (Figur 8) versehenen Isoluxlinien entsprechen demselben Wert der Beleuchtungsstärke. Entsprechendes gilt für die mit Bezugszeichen 602 (Figur 7) und 612 (Figur 8) versehenen Isoluxlinien. Wie dies in der Figur 8 zu erkennen ist, weist zumindest ein Teil der Isoluxlinien 611, 612 zumindest einen sich verjüngenden Abschnitt 613 auf. Dabei verjüngt sich der zumindest eine Abschnitt der entsprechenden Isoluxlinie 611, 612 nicht parallel zu der horizontalen Achse hh in Richtung des mittleren/zentralen Bereichs 610 der Lichtverteilung 60. Jeder zumindest eine sich verjüngende Abschnitt weist einen Spitzenabschnitt 614, 615 auf. Eine Zusammenschau der Figuren 7 und 8 lässt unmittelbar darauf schließen, dass das erfindungsgemäße Lichtmodul 100 eine Fernlichtverteilung 60 erzeugt, bei der die Spitzenabschnitte 614, 615 weniger gespitzt ausgebildet sind. Darüber hinaus weist ein (in vertikaler Richtung vv) oberer Teil 616 der den mittleren Bereich 610 als zweite Isoluxlinie umlaufenden Isoluxlinie 611 keine Vertiefung auf. Der obere Teil 616 kann beispielsweise geradlinig verlaufen oder eine Erhebung aufweisen. In diesem Fall heißt "weniger gespitzt" eine geringere Krümmung aufweisend. Deshalb weist die gemäß dem erfindungsgemäßen Lichtmodul 100 erzeugte Fernlichtverteilung 60 eine höhere Homogenität auf und wird von dem Fahrer eines entgegenkommenden Kraftfahrzeugs als angenehm empfunden. Eine Linse gemäß der vorliegenden Erfindung kann also mittels Verwischens Einschnürung reduzieren und eine Vertiefung in dem mittleren, eine sehr hohe Beleuchtungsstärke aufweisenden Bereich (in dem sogenannten "Maximum") einer Fernlichtverteilung reduzieren oder gar beseitigen.

Weiters zeigen die Figuren 9 bis 11 jeweils eine Linse 3 nach dem Stand der Technik (Figur 9), eine bereits im Zusammenhang mit der Figur 2 beschriebene erfindungsgemäße Linse 300 (Figur 10) und weitere Ausführungsform einer erfindungsgemäßen Linse 301 (Figur 11). Figur 9 zeigt, dass die Linse 3 nach dem Stand der Technik ein kollimiertes Lichtstrahlenbündel 80 erzeugt, wenn sich eine Punktlichtquelle in ihrem Brennpunkt befindet. Figur 10 zeigt, dass nur der erster, den asphärisch verlaufenden ersten Bereich 33 der zweiten lichtbrechenden Fläche 320 umfassenden Teil 350 der Linse 300 die Lichtstrahlen kollimiert, wenn diese Lichtstrahlen von einer im Brennpunkt des ersten Teils 350 der Linse 300 angeordneten Lichtquelle emittiert werden. Die durch den zweiten Bereich 340 aus der Linse 300 austretenden, durch die im Brennpunkt des ersten Teils 350 der Linse 300 angeordneten Punktlichtquelle erzeugten Lichtstrahlen 81 laufen auseinander, da die Krümmung des zweiten Bereichs 340 geringer ist, als die Krümmung des entsprechenden zweiten Bereichs 34 der Linse 3 nach dem Stand der Technik. Die Figur 11 zeigt nun eine weitere erfindungsgemäße Linse 301. Ein zweiter Bereich 341 der zweiten lichtbrechenden Fläche 321 dieser Linse 301 weist eine größere Krümmung auf, weshalb die durch diesen zweiten Bereich 341 austretenden, durch die im Brennpunkt des ersten Teils 350 der Linse 301 angeordneten Punktlichtquelle erzeugten Lichtstrahlen 82 zusammenlaufen. Der erster Teil 350 der Linse 301 in der Figur 11 und der erste Teil der Linse 300 in der Figur 10 ist mit dem gleichen Bezugszeichen "350" versehen, um zu betonen, dass der erste Teil dieser beiden Linsen gleich, vorzugsweise asphärisch, ausgebildet sein kann. Je nach zu erzeugender Lichtverteilung kann das Einsetzen entweder der Linse 300 mit dem weniger gekrümmten zweiten Bereich 340 der zweiten lichtbrechenden Fläche 320 oder der Linse 301 mit dem stärker gekrümmten zweiten Bereich 341 der zweiten lichtbrechenden Fläche 321 in ein Lichtmodul Vorteile mit sich bringen. Dabei ist anzumerken, dass alle oben genannte auf den weniger gekrümmten zweiten Bereich 340 bezogene Vorteile auch für den stärker gekrümmten zweiten Bereich 341 gelten. Eine Linse nach Figur 11 kann ohne weiteres in einem Lichtmodul 100 nach Figur 2 eingesetzt werden. Beispielsweise kann die Linse 301 mit dem stärker gekrümmten zweiten Bereich 341 der zweiten lichtbrechenden Fläche 321 in das in der Figur 2 gezeigte erfindungsgemäße Lichtmodul 100 statt der Linse 300 mit dem weniger gekrümmten zweiten Bereich 340 der zweiten lichtbrechenden Fläche 320 eingesetzt werden, um dadurch unerwünschte Farbeffekte an der Hell-Dunkel-Grenze 251 bei einer Abblendlichtverteilung 40 zu vermindern und um gleichzeitig die oben beschriebene Vertiefung des mittleren Bereichs einer aus dem Stand der Technik bekannten Fernlichtverteilung, welche Vertiefung als ein dunkler Fleck oberhalb des Maximums erscheint, zu reduzieren beziehungsweise zu beseitigen.

Die vorliegende Erfindung ist keinesfalls auf die oben dargestellten vorteilhaften Ausführungsformen beschränkt. Zum Beispiel kann das erfindungsgemäße Lichtmodul auch weitere Bauteile umfassen. Zum Erzeugen von für den Straßenverkehr geeignetem Licht kann das Lichtmodul eine andere als oben beschrieben Beleuchtungsvorrichtung aufweisen. Eine gültige Option ist, eine oder mehrere Laserlichtquellen oder herkömmliche Glüh- oder HID-Lampen, vorteilhaft mit Xenongas gefüllt, als Lichtquelle zu verwenden. Weiters ist es denkbar, dass eine Beleuchtungsvorrichtung in einem erfindungsgemäßen Lichtmodul weitere optisch relevante Elemente enthält, wie beispielsweise Reflektoren, Spiegeln, insbesondere Mikroscanner und Spiegelarrays, Linsenanordnungen, Prismen, Lichtleiter, weitere Blenden beziehungsweise Blendenvorrichtungen und so weiter. Darüber hinaus ist das abzubildende Objekt nicht nur auf eine Blende mit einer optisch wirksamen Kante beschränkt. Im Allgemeinen wird mittels des abzubildenden Objekts ein Leuchtbild erzeugt, welches mit einer Linse gemäß der vorliegenden Erfindung als Lichtbild vor das Lichtmodul abgebildet wird. Ein solches abzubildendes Objekt kann beispielsweise eine oder mehrere Stirnflächen von Lichtleitern umfassen, an welchen Stirnflächen das in die Lichtleiter eingespeiste Licht austritt und welche Stirnflächen vorzugsweise aneinander angrenzen und in einem Halter aufgenommen sind - auf diese Weise können die leuchtenden Stirnflächen ein Leuchtbild bilden. Dabei wird unter einer Stirnfläche eines Lichtleiters eine quer zur Längsrichtung des Lichtleiters angeordnete, einer Querschnittsfläche deckungsgleiche Endfläche verstanden. Darüber hinaus kann das abzubildende Objekt als ein beispielsweise in einer dafür vorgesehen Halterung angeordnetes Lichtkonversionsmittel ausgebildet sein, welches Lichtkonversionsmittel dazu eingerichtet ist, von einer oder mehreren Laserlichtquellen erzeugtes Licht zu konvertieren. Dabei kann durch eine Lichtkonversion des Laserlichts ein Leuchtbild auf dem Lichtkonversionsmittel erzeugt werden.

## Patentansprüche

1. Lichtmodul (100) für einen Kraftfahrzeugscheinwerfer umfassend
- zumindest eine Lichtquelle (21, 23),
- ein abzubildendes Objekt (24, 25), wobei die zumindest eine Lichtquelle (21, 23) dazu eingerichtet ist, Licht zu erzeugen, mit dem das abzubildende Objekt (24, 25) beleuchtet wird,
- eine Linse (300, 301), die eine optische Achse (7) und zumindest zwei lichtbrechende Flächen (31, 320, 321) aufweist, wobei eine erste lichtbrechende Fläche (31) dem abzubildenden Objekt (24, 25) zugewandt ist und die zweite lichtbrechende Fläche (320, 321) der ersten lichtbrechenden Fläche (31) gegenüberliegt und zumindest zwei unterschiedlich ausgebildete Bereiche (33, 340, 341) aufweist, wobei ein erster Bereich (33) eine asphärische Form aufweist, zentral an der zweiten lichtbrechenden Fläche (320, 321) angeordnet ist, das abzubildende Objekt (24, 25) in einer Objektbrennebene (351) eines ersten Teils (350) der Linse (300, 301) angeordnet ist, welcher erste Teil (350) der Linse den ersten Bereich (33) der zweiten lichtbrechenden Fläche (320, 321) und die erste lichtbrechende Fläche (31) umfasst, wobei die Bildbrennebene des ersten Teils (350) der Linse (300, 301) im Unendlichen liegt, wobei
- zumindest ein zweiter Bereich (340, 341) der zweiten lichtbrechenden Fläche (320, 321) einen freiförmigen, von der asphärischen Form des ersten Bereichs (33) abweichenden Verlauf aufweist und derart ausgebildet ist, dass ein zweiter Teil (360) der Linse (300, 301), welcher zweite Teil (360) den zweiten Bereich (340, 341) der zweiten lichtbrechenden Fläche (320, 321) und die erste lichtbrechende Fläche (31) umfasst, eine objektseitige, von der Objektbrennebene (351) abweichende Brennfläche (361) aufweist,
**dadurch gekennzeichnet, dass** der zweite Bereich (340, 341) derart ausgebildet ist, dass die Brennfläche (361) relativ zu der Objektbrennebene (351) derart orientiert ist, so dass ein zentraler Bereich (610) einer von dem Lichtmodul (100) erzeugten Lichtverteilung (60) nur in horizontaler Richtung vergrößert wird, und das abzubildende Objekt (24,25) zumindest teilweise aus einem Kunststoff mit einer vorgegebenen thermischen Beschädigungsschwelle ausgebildet ist.

2. Lichtmodul nach Anspruch 1, **dadurch gekennzeichnet, dass** die Beschädigungsschwelle einen Wert von etwa 180000 W/m², vorzugsweise einen Wert von etwa 60000 W/m², insbesondere einen Wert von etwa 10000 W/m², nicht überschreitet.

3. Lichtmodul nach Anspruch 1 oder 2, **dadurch gekennzeichnet, dass** das abzubildende Objekt (24, 25) in einem für das abzubildende Objekt vorgesehenen Halter gehalten wird, wobei der Halter zumindest teilweise in der Objektbrennebene (351) des ersten Teils (350) der Linse (300, 301) angeordnet und aus einem Material mit einer vorgegebenen thermischen Beschädigungsschwelle ausgebildet ist, wobei die Beschädigungsschwelle beispielsweise einen Wert von etwa 180000 W/m², vorzugsweise einen Wert von etwa 60000 W/m², insbesondere einen Wert von etwa 10000 W/m², nicht überschreitet.

4. Lichtmodul nach einem der Ansprüche 1 bis 3, **dadurch gekennzeichnet, dass** das abzubildende Objekt als eine aus einem Kunststoff ausgebildete Blende (24) mit einer optisch wirksamen Kante (25) ausgebildet ist, wobei die thermische Beschädigungsschwelle des Kunststoffes beispielsweise einen Wert von etwa 180000 W/m², vorzugsweise einen Wert von etwa 60000 W/m², insbesondere einen Wert von etwa 10000 W/m², nicht überschreitet, wobei die Kante vorzugsweise dazu eingerichtet ist, eine Hell-Dunkel-Grenze (251) mit einem Asymmetrieanstieg auszubilden.

5. Lichtmodul nach einem der Ansprüche 1 bis 4, **dadurch gekennzeichnet, dass** die Linse (300, 301) plankonvex oder bikonvex ausgebildet ist.

6. Lichtmodul nach einem der Ansprüche 1 bis 5, **dadurch gekennzeichnet, dass** der zweite Bereich (340, 341) spiegelsymmetrisch bezüglich einer Horizontal- und/oder einer Vertikalebene, durch die die optische Achse (7) verläuft, ausgebildet ist.

7. Lichtmodul nach einem der Ansprüche 1 bis 5, **dadurch gekennzeichnet, dass** der zweite Bereich (340, 341) rotationssymmetrisch bezüglich der optischen Achse (7) ausgebildet ist.

8. Lichtmodul nach einem der Ansprüche 1 bis 7, **dadurch gekennzeichnet, dass** durch einen Objektbrennpunkt des ersten Teils (350) der Linse (300, 301) verlaufende, durch die erste lichtbrechende Fläche (31) in die Linse (300, 301) eintretende und durch den zweiten Bereich (340, 341) der zweiten lichtbrechenden Fläche (320, 321) aus der Linse (300, 301) austretende Lichtstrahlen (81, 82) nicht kollimiert sind.

9. Lichtmodul nach einem der Ansprüche 1 bis 8, **dadurch gekennzeichnet, dass** die größte Krümmung des zweiten Bereichs (340) kleiner als die kleinste Krümmung des ersten Bereichs (33) ist.

10. Lichtmodul nach Anspruch 9, **dadurch gekennzeichnet, dass** durch einen Objektbrennpunkt des ersten Teils (350) der Linse (300) verlaufende, durch die erste lichtbrechende Fläche (31) in die Linse (300) eintretende und durch den zweiten Bereich (340) der zweiten lichtbrechenden Fläche (320) aus der Linse (300) austretende Lichtstrahlen (81) auseinanderlaufen.

11. Lichtmodul nach einem der Ansprüche 1 bis 8, **dadurch gekennzeichnet, dass** die kleinste Krümmung des zweiten Bereichs (341) größer als die größte Krümmung des ersten Bereichs (33).

12. Lichtmodul nach Anspruch 11, **dadurch gekennzeichnet, dass** durch einen Objektbrennpunkt des ersten Teils (350) der Linse (301) verlaufende durch die erste lichtbrechende Fläche (31) in die Linse (301) eintretende und durch den zweiten Bereich (341) der zweiten lichtbrechenden Fläche (321) aus der Linse (301) austretende Lichtstrahlen (82) zusammenlaufen.

13. Kraftfahrzeugscheinwerfer mit zumindest einem Lichtmodul nach einem der Ansprüche 1 bis 12.

14. Kraftfahrzeug mit zumindest einem Kraftfahrzeugscheinwerfer nach Anspruch 13.

## Claims

1. Light module (100) for a motor vehicle headlamp comprising
- at least one light source (21, 23),
- an object (24, 25) to be imaged, the at least one light source (21, 23) configured to generate light with which the object (24, 25) to be imaged is illuminated, and
- a lens (300, 301) having an optical axis (7) and at least two light-refracting surfaces (31, 320, 321), a first light-refracting surface (31) facing the object (24, 25) to be imaged and the second light-refracting surface (320, 321) being opposite the first light-refracting surface (31) and having at least two regions (33, 340, 341) of different shapes,
wherein a first region (33) has an aspherical form, is located centrally at the second refractive surface (320, 321), the object (24, 25) to be imaged being located in an object focal plane (351) of a first part (350) of the lens (300, 301), said first part (350) of the lens comprising the first region (33) of said second refractive surface (320, 321) and the first refractive surface (31), the image focal plane of the first part (350) of the lens (300, 301) being at infinity, wherein
at least a second portion (340, 341) of said second refractive surface (320, 321) has a free-form shape which deviates from the aspherical shape of the first region (33) and is formed in such a manner that a second part (360) of the lens (300, 301), said second part (360) comprising the second region (340, 341) of said second light-refracting surface (320, 321) and the first light-refracting surface (31), has an object-side focal surface (361) which deviates from the object focal plane (351),
**characterised in that**
the second region (340, 341) is formed in such a manner that the focal surface (361) is oriented relative to the object focal plane (351) in such a manner that a central region (610) of a light distribution (60) generated by the light module (100) is enlarged only in the horizontal direction, and the object (24, 25) to be imaged is formed at least partially from a plastic having a predetermined thermal damage threshold.

2. Light module according to claim 1, **characterised in that** the damage threshold does not exceed a value of about 180,000 W/m², preferably a value of about 60,000 W/m², in particular a value of about 10,000 W/m².

3. Light module according to claim 1 or 2, **characterised in that** the object (24, 25) to be imaged is held in a support provided for the object to be imaged, said support being located at least partially in the object focal plane (351) of the first part (350) of the lens (300, 301) and being made of a material with a predetermined thermal damage threshold, wherein said damage threshold does not exceed, for example, a value of about 180,000 W/m², preferably a value of about 60,000 W/m², in particular a value of about 10,000 W/m².

4. Light module according to any one of claims 1 to 3, **characterised in that** the object to be imaged is realised as a screen (24) made of a plastic and having an optically effective edge (25), wherein the thermal damage threshold of the plastic does not exceed, for example, a value of approximately 180,000 W/m², preferably a value of approximately 60,000 W/m², in particular a value of about 10000 W/m², wherein the edge is preferably configured to form a cut-off line (251) with an asymmetric rise.

5. Light module according to any one of claims 1 to 4, **characterised in that** the lens (300, 301) is realised plano-convex or biconvex.

6. Light module according to any one of the claims 1 to 5, **characterised in that** the second region (340, 341) is realised mirror-symmetric with respect to a horizontal and/or a vertical plane through which the optical axis (7) extends.

7. Light module according to any one of the claims 1 to 5, **characterised in that** the second region (340, 341) is rotationally symmetric with respect to the optical axis (7).

8. Light module according to any one of claims 1 to 7, **characterised in that** light rays (81, 82) passing through an object focal point of the first part (350) of the lens (300, 301), entering the lens (300, 301) through the first refractive surface (31) and exiting the lens (300, 301) through the second region (340, 341) of the second refractive surface (320, 321) are not collimated.

9. Light module according to any one of claims 1 to 8, **characterised in that** the largest curvature of the second region (340) is smaller than the smallest curvature of the first region (33).

10. Light module according to claim 9, **characterised in that** light rays (81) passing through an object focal point of the first part (350) of the lens (300), entering the lens (300) through the first refractive surface (31) and exiting the lens (300) through the second region (340) of the second refractive surface (320) are divergent.

11. Light module according to any one of claims 1 to 8, **characterised in that** the smallest curvature of the second region (341) is greater than the largest curvature of the first region (33).

12. Light module according to claim 11, **characterised in that** light rays (82) passing through an object focal point of the first part (350) of the lens (301), entering the lens (301) through the first refractive surface (31) and exiting the lens (301) through the second region (341) of the second refractive surface (321) are convergent.

13. Motor vehicle headlamp comprising at least one light module according to any one of claims 1 to 12.

14. Motor vehicle comprising at least one motor vehicle headlamp according to claim 13.

## Revendications

1. Module d'éclairage (100) pour un phare de véhicule automobile comportant
― au moins une source lumineuse (21, 23),
― un objet (24, 25) à imager, ladite au moins une source de lumière (21, 23) étant configurée pour produire de la lumière avec laquelle l'objet (24, 25) à imager est éclairé, et
― une lentille (300, 301) comportant un axe optique (7) et au moins deux surfaces de réfraction de la lumière (31, 320, 321), une première surface de réfraction de la lumière (31) étant tournée vers l'objet (24, 25) à imager et la deuxième surface de réfraction de la lumière (320, 321) étant opposée à la première surface de réfraction (31) et présentant au moins deux régions (33, 340, 341) de formes différentes,
une première région (33) présentant une forme asphérique situé de manière centrale au niveau de la seconde surface de réfraction (320, 321), l'objet (24, 25) à imager étant situé dans un plan focal d'objet (351) d'une première partie (350) de l'objectif (300, 301), ladite première partie (350) de l'objectif comportant la première région (33) de la seconde surface de réfraction (320, 321) et la première surface de réfraction (31), le plan focal d'image de la première partie (350) de l'objectif (300, 301) se trouvant à l'infini,
au moins une deuxième partie (340, 341) de ladite deuxième surface de réfraction (320, 321) présentant une forme libre qui s'écarte de la forme asphérique de la première zone (33) et étant conçue de telle sorte qu'une deuxième partie (360) de la lentille (300, 301), laquelle deuxième partie (360) comprend la deuxième zone (340, 341) de la deuxième surface de réfraction (320, 321) et de la première surface de réfraction (31), présente une surface focale (361) d'objet qui s'écarte du plan focal objet (351)
**caractérisé en ce que**
la deuxième région (340, 341) est formée de telle sorte que la surface focale (361) est orientée par rapport au plan focal de l'objet (351) de manière qu'une région centrale (610) d'une distribution de lumière (60) générée par le module de lumière (100) n'est agrandie que dans la direction horizontale, et l'objet (24, 25) à imager est formé au moins partiellement d'une matière plastique ayant un seuil de dommage thermique prédéterminé.

2. Module d'éclairage selon la revendication 1, **caractérisé en ce que** le seuil de dommage ne dépasse pas une valeur d'environ 180000 W/m², de préférence une valeur d'environ 60000 W/m², en particulier une valeur d'environ 10000 W/m².

3. Module d'éclairage selon la revendication 1 ou 2, **caractérisé en ce que** l'objet (24, 25) à imager est maintenu dans un support prévu pour l'objet à imager, le support étant au moins partiellement situé dans le plan focal d'objet (351) de la première partie (350) de la lentille (300, 301) et étant formé d'un matériau ayant un seuil de dommage thermique prédéterminé, ledit seuil de dommage ne dépassant pas, par exemple, une valeur d'environ 180000 W/m², de préférence une valeur d'environ 60000 W/m², en particulier une valeur d'environ 10000 W/m².

4. Module d'éclairage selon l'une quelconque des revendications 1 à 3, **caractérisé en ce que** l'objet à imager est réalisé sous la forme d'un diaphragme (24) en matière plastique ayant un bord optiquement efficace (25), le seuil de dommage thermique de la matière plastique ne dépassant pas, par exemple, une valeur d'environ 180000 W/m², de préférence une valeur d'environ 60000 W/m², en particulier une valeur d'environ 10000 W/m², le bord étant de préférence adapté pour former une ligne de coupure (251) avec une montée de l'asymétrie.

5. Module d'éclairage selon l'une quelconque des revendications 1 à 4, **caractérisé en ce que** la lentille (300, 301) est réalisée plano-convexe ou bi-convexe.

6. Module d'éclairage selon l'une quelconque des revendications 1 à 5, **caractérisé en ce que** la deuxième région (340, 341) est réalisée symétrique par rapport à un plan horizontal et/ou vertical qui est traversé par l'axe optique (7).

7. Module d'éclairage selon l'une quelconque des revendications 1 à 5, **caractérisé en ce que** la deuxième région (340, 341) est réalisée symétrique de révolution par rapport à l'axe optique (7).

8. Module d'éclairage selon l'une quelconque des revendications 1 à 7, **caractérisé en ce que** des rayons lumineux (81, 82) qui passent par un point focal d'objet de la première partie (350) de la lentille (300, 301), entrent dans la lentille (300, 301) par la première surface de réfraction (31) et sortent de la lentille (300, 301) par la deuxième région (340, 341) de la deuxième surface de réfraction (320, 321) ne sont pas collimatés.

9. Module d'éclairage selon l'une quelconque des revendications 1 à 8, **caractérisé en ce que** la plus grande courbure de la deuxième région (340) est inférieure à la plus petite courbure de la première région (33).

10. Module d'éclairage selon la revendication 9, **caractérisé en ce que** les rayons lumineux (81) qui passent par un point focal d'objet de la première partie (350) de la lentille (300), entrent dans la lentille (300) par la première surface de réfraction (31) et sortent de la lentille (300) par la deuxième région (340) de la deuxième surface de réfraction (320) sont divergents.

11. Module d'éclairage selon l'une quelconque des revendications 1 à 8, **caractérisé en ce que** la plus petite courbure de la deuxième région (341) est supérieure à la plus grande courbure de la première région (33).

12. Module de lumière selon la revendication 11, **caractérisé en ce que** les rayons lumineux (82) qui passent par un point focal d'objet de la première partie (350) de la lentille (301), entrent dans la lentille (301) par la première surface de réfraction (31) et sortent de la lentille (301) par la deuxième région (341) de la deuxième surface de réfraction (321) sont convergents.

13. Phare de véhicule automobile comportant au moins un module d'éclairage selon l'une quelconque des revendications 1 à 12.

14. Véhicule automobile comportant au moins un phare de véhicule automobile selon la revendication 13.
